# EUROPEAN PATENT APPLICATION

(11) **EP 0 779 693 A1**
(43) Date of publication of application: **18.06.1997**
(21) Application number: 95308987.7
(22) Date of filing: 11.12.1995
(51) Int. Cl.: H02J 7/00, H04M 1/72, H04B 1/38

(54) **A charging battery structure for hand phone**

(71) Applicant: Teng, Yen-Ping, Tainan City (TW)
(72) Inventor: Teng, Yen-Ping, Tainan City (TW)
(74) Representative: Bucks, Teresa Anne

(57) **Abstract**

A charging battery structure for hand phone, including a fast charging board and a switch/plug set. The switch/plug set is connected with the fast charging board so that the fast charging board can adapt the power from the plug to the batteries and charge the same. In use, the switch of the switch/plug set is pushed to protrude the plug thereof outside the housing so as to insert into an external power socket for directly charging the batteries.

## Description

The present invention relates to a charging battery structure for hand phone, including a fast charging board and a switch/plug set. In use, the switch of the switch/plug set is pushed to protrude the plug thereof outside the housing so as to insert into an external power socket for directly charging the batteries.

A conventional battery for hand phone is charged by an external charger. When a user travels far, the charger must be carried with him. This often causes inconvenience to the user.

It is a primary object of the present invention to provide a charging battery structure for hand phone, including a fast charging board and a switch/plug set. In use, the switch of the switch/plug set is pushed to protrude the plug thereof outside the housing so as to insert into an external power socket for directly charging the batteries.

The advantages of the present invention are as follows:
1. The battery structure of the hand phone itself can fast charge the batteries at any place having a power socket so that the hand phone can be more conveniently used.
2. It is no more necessary to carry a charger with the hand phone so that the communication of the hand phone will not interrupted due to lack of the charger.
3. By means of the charging battery structure of the present invention, the charger is no more necessary so that the manufacturing cost of the hand phone is reduced.

The present invention can be best understood through the following description and accompanying drawings, wherein:
Fig. 1 is a perspective assembled view of the present invention;
Fig. 1A is an enlarged view of the power contacts disposed on the upper housing of the present invention;
Fig. 1B is an enlarged view of the indicator lamp of the present invention; and
Fig. 2 is a sectional assembled view of the present invention.

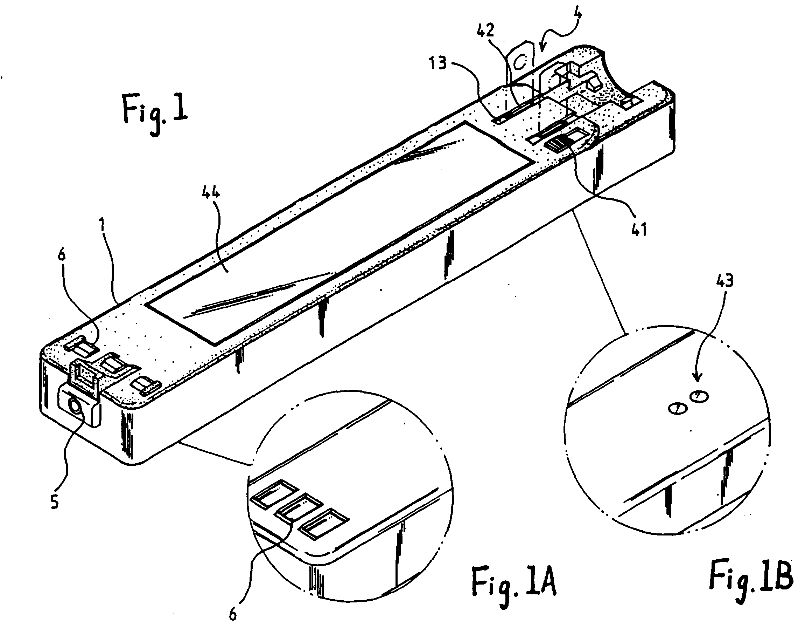

Please refer to Fig. 1. The battery structure of the present invention includes a housing 1, batteries 2, a fast charging board 3, a switch/plug set 4, an adapter 5 and power contacts 6.

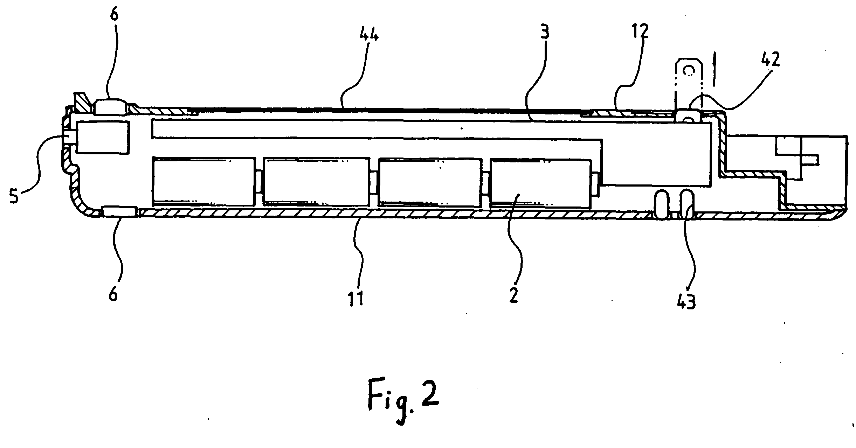

The housing 1 includes an upper housing 11 and a lower housing 12 which associate with each other to enclose the batteries 2 and fast charging board 3 as shown in Fig. 2. Two rectangular slots 13 are formed on the lower housing 12 near the top end thereof. A plug 42 of the switch/plug set 4 is passed through the slots 13. A central portion of the lower housing 12 is formed with a rectangular through hole in which a heat-radiating plate 44 is attached so as to radiate the heat generated by the fast charging board 3. In addition, the adapter 5 is disposed at a bottom end of the upper housing 11 and an indicator lamp 43 is disposed near a top end of the upper housing 11 for indicating the charging state.

The fast charging board 3 is powered on through the switch/socket set 4 so as to supply power to the batteries 2 and fast charge the same. The fast charging board 3 has a stepped profile so as to fixedly hold the batteries 2.

The switch/socket set 4 includes a switch 41 and a plug 42. By means of switching the switch 41 up and down, the plug 42 is extended or retracted.

The adapter 5 serves to directly adapt the power source of a car to the batteries 2 of the hand phone so that the power source of the car can supply power to the hand phone.

The power contacts 6 are respectively disposed on the upper and lower housings 11, 12. A charger can indirectly charge the batteries 2 through the power contacts 6 disposed on the bottom of the upper housing 11. The power contacts 6 disposed on the bottom of the lower housing 12 serve to supply power to the hand phone.

According to the above arrangements, the batteries 2 are serially connected and fixedly attached in the lower housing 12 and the adapter 5, power contacts 6 and fast charging board 3 are connected to the batteries 2. ( The fast charging board 3 is disposed above the batteries 2 under the upper housing 11 so as to restrict the batteries 1 from sliding. ) Then the switch/plug set 4 is connected with the fast charging board 3 so that the fast charging board 3 can adapt the power from the plug 42 to the batteries 2 and charge the same. At this time, the indicator lamp 43 is turned on to indicate the charging state.

When using the present invention, the switch 41 is pushed to protrude the plug 42 outside the housing so as to insert into an external power socket for charging the batteries 2. Alternatively, a charger can be used to charge the batteries 2 through the power contacts 6.

The above preferred embodiment is only an example of the present invention and the scope of the present invention should not be limited to the example. Any modification or variation derived from the example should fall within the scope of the present invention.

## Claims

1. A charging unit for a portable phone, comprising a housing (1), a plurality of batteries (2), a fast charging board (3), a switch/plug set (4), an adapter (5) and power contacts (6), characterised in that the switch/plug set is connected with the fast charging board so that the fast charging board can adapt the power from the plug to the batteries and charge the same, and in use, the switch is pushed to protrude the plug outside the housing so as to insert into an external power socket for directly charging the batteries.

2. A charging unit as claimed in claim 1 in which the housing includes an upper housing (11) and a lower housing (12) which associate with each other, the lower housing for receiving the batteries and the fast charging board.

3. A charging unit as claimed in claim 1 or claim 2 in which two rectangular slots (13) are formed in the lower housing (12) near an upper end thereof, a plug (42) of the switch/plug set (4) being passed through the slots, a central portion of the lower housing being formed with a rectangular through hole in which a heat-radiating plate (44) is attached so as to radiate the heat generated by the fast charging board (3).

4. A charging unit as claimed in claim 2 in which the adapter (5) is disposed at a lower end of the upper housing (11) and an indicator lamp (43) is disposed at an upper end of the upper housing for indicating the charging state.

5. A charging unit as claimed in claim 2 or claim 3 in which the fast charging board (3) is powered on through the switch/socket set (4) so as to supply power to the batteries (2) and fast charge the same, the fast charging board having a stepped profile so as to fixedly hold the batteries.

6. A charging unit as claimed in any one of the preceding claims in which the switch/socket set (4) includes a switch (41) and a plug (42), the arrangement being such that switching the switch up and down causes the plug to be extended or retracted.

7. A charging unit as claimed in any one of the preceding claims in which the adapter (5) serves to directly adapt the power source of a car to the batteries (2) so that the power source of the car can supply power to the phone.

8. A charging unit as claimed in any one of the preceding claims in which the power contacts are respectively disposed on lower ends of the upper and lower housings (11/12), a charger being used to indirectly charge the batteries (2) through the power contacts disposed on the lower end of the upper housing, the power contacts disposed on the lower end of the lower housing serving to supply power to the phone.

9. A charging battery structure for hand phone, comprising a housing (1), batteries (2), a fast charging board (3), a switch/plug set (4), an adapter (5) and power contacts (6), wherein:
the housing includes an upper housing (11) and a lower housing (12) which associate with each other, the lower housing receiving the batteries and the fast charging board, two rectangular slots (13) being formed on the lower housing near the top end thereof, a plug (42) of the switch/plug set being passed through the slots, a central portion of the lower housing being formed with a rectangular through hole in which a heat-radiating plate (44) is attached so as to radiate the heat generated by the fast charging board, the adapter being disposed at a bottom end of the upper housing and an indicator lamp (43) being disposed at a top end of the upper housing for indicating the charging state;
the fast charging board is powered on through the switch/socket set so as to supply power to the batteries and fast charge the same, the fast charging board having a stepped profile so as to fixedly hold the batteries;
the switch/socket set includes a switch (41) and a plug (42), by means of switching the switch up and down, the plug being extended or retracted;
the adapter serves to directly adapt the power source of a car to the batteries so that the power source of the car can supply power to the hand phone; and
the power contacts are respectively disposed on bottoms of the upper and lower housings, a charger being used to indirectly charge the batteries through the power contacts disposed on the bottom of the upper housing, the power contacts disposed on the bottom of the lower housing serving to supply power to the hand phone, said battery structure being characterised in that the switch/plug set is connected with the fast charging board so that the fast charging board can adapt the power from the plug to the batteries and charge the same, and in use, the switch is pushed to protrude the plug outside the housing so as to insert into an external power socket for directly charging the batteries.
